# EUROPÄISCHE PATENTANMELDUNG

(11) **EP 3 296 704 A1**
(43) Veröffentlichungstag der Anmeldung: **21.03.2018**
(21) Anmeldenummer: 16189172.6
(22) Anmeldetag: 16.09.2016
(51) Int. Cl.: G01F 15/00, G01F 15/14, G01F 15/18

(54) **FLUIDZÄHLER**

(71) Anmelder: Energoflow AG, 4600 Olten (CH)
(72) Erfinder: STETSENKO, Andrii, 61051 Kharjov (UA); GLOVA, Lurii, 61204 Kharjov (UA); NEDZELSKYI, Sergii, 61057 Kharjov (UA)
(74) Vertreter: Jeck, Anton

(57) **Zusammenfassung**

Die Erfindung betrifft einen Fluidzähler, der umfasst: ein Gehäuse, das eine Kammer mit einen nach innen gewölbten Teil in einer Konfiguration aufweist, welche eine Stromausbildung eines Mediums ermöglicht, einen Durchflussmesser, der innerhalb des Gehäuses des Zählers liegt und zur Messung der Stromgeschwindigkeit des Mediums dient, eine Übergangseinrichtung zur Anpassung verschiedener Durchmesser des Durchflussmessers und der Auslauföffnung des Zählers, eine Stromvorbereitungseinrichtung, die zur Trennung und Stabilisierung des Messstoffstroms dient, einen Einlaufkanal des Messstoffstroms, einen Auslaufkanal für den Mediumstrom, das aus dem Zähler ausfließt, eine Elektronikeinheit, einen Grobfilter, ein Sperrventil und einen Fluidleckage-Erkennungssensor.

## Beschreibung

Die vorliegende Erfindung betrifft einen Fluidzähler zur Durchflussmessung.

Es gibt verschiedene Prinzipien und technische Lösungen, welche die Mengenmessung eines Mediums realisieren, das durch ein Messgerät strömt.

Eine der bekannten modernen Lösungen sind Zähler, wie Sie die Dokumente US 8 776 613 B2, EP 2 375 224 A1 und WO 2012 152 560 A1 beschreiben, deren Funktion ausschließlich auf Volumenprinzipien beruht.

Zu den Zählern, die nach den erwähnten Volumenprinzipien arbeiten, gehören mechanische Turbinenzähler und Wälzkolbenzähler. Der Vorteil der mechanischen Zähler ist ihre Beständigkeit bei Stromstörungen und -verzerrungen des durchströmenden Messstoffes, sowie Unempfindlichkeit bei Stromumkehr. Als Hauptnachteil des mechanischen Messverfahrens dieser Zähler gelten bewegliche Teile, was sie für Verschmutzungen und zur Verschleißneigung von Teilen anfällig macht, die sich unmittelbar im Strom befinden. Außerdem können diagnostische Möglichkeiten bei mechanischen Zählern in dem Umfang, wie es mit elektronischen Zählern der Fall ist, nicht realisiert werden, was die notwendige operative Kontrolle ihrer metrologischen und technischen Daten unmöglich macht.

Eine Alternative zu mechanischen Durchflussmessern (Turbinenzählern und Wälzkolbenzählern) können Ultraschallzähler sein, deren Funktion auf der Abtastung der Stromgeschwindigkeit mit Ultraschallimpulsen beruht. Die Ultraschallzähler weisen keine mechanischen Teile und Komponenten auf. Der Nachteil der Ultraschallzähler ist ihre Neigung zur Stromverzerrung. Aus diesem Grund, und um höhere Genauigkeit zu erreichen, sind Gleichrichter oder lange direkte Einlasstrakte einzusetzen, die allerdings große Messräume brauchen, was nicht immer möglich ist.

Zu den allgemeinen Nachteilen von Geräten, die nach dem Volumenprinzip arbeiten, ist auch die Neigung, bei der Durchflussmessung des Mediums, zu Näherungsfehlern zu zählen, die wegen der Druck- und Temperaturschwankungen entstehen, was es notwendig macht zusätzliche Mengenumwerter einzusetzen, die zur Druck- und Temperaturkompensation dienen, und ebenfalls entsprechender Druck- und Temperaturgeber.

Darüber hinaus, wie oben erwähnt, brauchen die genannten Zähler Adapter-Einrichtungen, um die Messgenauigkeit zu erhöhen, die zur Erstellung eines gleichmäßigen Gasstroms dienen, um die Stromgeschwindigkeitsgeber vor Turbulenz (Asymmetrie) zu isolieren und zu schützen, die die Messgenauigkeit beeinflusst. Die Verwendung der genannten Adapter weist wesentliche Probleme im Fall der Haushaltsgaszähler auf, die über kleine Schnitte verfügen und zum Druckabfall wegen der Anwendung der genannten Adapter neigen. Die Verwendung von Adaptern verursacht ernsthafte Probleme auch im Fall deren Anwendung mit Industriegebern, bei denen die hohe Stromgeschwindigkeit einer erhöhten Dauerhaftigkeit von Adaptern bedarf, um die vom zu messenden Strom verursachten Spannungen und Störungen auszuhalten. Diese Einschränkung kommt hauptsächlich bei hoher Stromenergie vor. Die bekannten Lösungen sind ebenfalls gegen Störungen höchst empfindlich, die durch asymmetrische Verengungen hervorgerufen sind, die gewöhnlich in Ventilen von Rohrleitungen entstehen, besonders wenn sie in unmittelbarer Nähe zum Sensor, in der Regel in unmittelbarer Nähe zum Einlauf des Zählers, liegen.

Eine der bekannten modernen Lösungen, in der die oben erwähnten Nachteile beseitigt sind, sind Zähler, die aus einem Gehäuse bestehen, in dem ein oder mehrere Massendurchflussmesser, wie sie im Dokument EP 2 824 432 A3 beschrieben werden. Der Gesamtstrom in solchen Zählern wird in eine Mehrzahl von kleineren Strömen aufgeteilt, die jeweils durch einen Massendurchflussmesser entsprechender Typengröße gemessen werden. Diese Lösung weist einen sehr komplizierten Aufbau auf und ist wegen der Mehrzahl von Durchflusssensoren teuer, die zur Sicherstellung der Messung von großen Gasdurchflüssen und -volumen erforderlich sind, und somit ein Einschränkung darstellt für die Anwendung in kleinen (Haushalts-)Zählern. Die oben erwähnte bekannte Lösung weist auch die Einschränkung der schlechten "internen Skalierbarkeit" der Sensoren auf, weil die Durchflusssensoren für jede einzelne Durchflussmesserklasse entwickelt und hergestellt werden müssen.

Aufgabe der vorliegenden Erfindung ist die Entwicklung einer Vorrichtung, welche die oben genannten Einschränkungen und Probleme beseitigt.

Diese Aufgabe wird durch den Fluidzähler mit den Merkmalen des Anspruchs 1 gelöst. Insbesondere ist die Aufgabe dieser Erfindung die Erstellung eines kompakten Zählers mit kleinen Außenabmessungen, der gegen Störungen und Verzerrungen des Messstoffstroms unempfindlich ist.

Weitere Verbesserungen ergeben sich aus den Merkmalen der Unteransprüche. In einer ersten, für die Funktion der Vorrichtung vorteilhaften, Ausgestaltung mit den Merkmalen des Anspruchs 2, ist ein Gehäuse, in Form eines Zylinders, insbesondere eine im Inneren des Gehäuses gebildete Kammer, mit einer gleichmäßigen Abrundung eines der Böden ausgeführt, wodurch ein turbulenzfreier Stromfluss erreicht wird.

In einer zweiten, für die Funktion der Vorrichtung vorteilhaften, Ausgestaltung mit den Merkmalen des Anspruchs 3, weist der abgerundete Boden der Kammer einen nach innen gewölbten Teil auf, wodurch der Stromfluss in Richtung des Durchflussmessers gelenkt wird.

In einer dritten, für die Funktion der Vorrichtung vorteilhaften, Ausgestaltung mit den Merkmalen des Anspruchs 4, liegt der Durchflussmesser im Zentrum entlang der Achse der zylindrischen Kammer, wobei sein Gehäuse einen Kanal bildet durch den der ausgebildete, stabile und gleichmäßige Strom in Richtung des Auslaufkanals fließt, wodurch ein laminarer Stromfluss erreicht wird.

In einer vierten, für die Funktion der Vorrichtung vorteilhaften, Ausgestaltung mit den Merkmalen des Anspruchs 5, weist die Kammer eine Übergangseinrichtung auf, die zur Anpassung der Durchmesser des Durchflussmessers und der Auslauföffnung des Zählers selbst dient und in der Nähe der Auslauföffnung liegt, wodurch der Zähler skalierbar wird.

In einer fünften, für die Funktion der Vorrichtung vorteilhaften, Ausgestaltung mit den Merkmalen des Anspruchs 6, weist die Kammer, in ihrem Boden, eine gitterförmige Stromvorbereitungseinrichtung auf, die den einfließenden Messstoffstrom in eine Mehrzahl von einzelnen Strömen zerteilt, die durch die Kammer fließen, wodurch die Ausbildung eines stabilen, gleichmäßigen Stroms sichergestellt ist.

In einer sechsten, für die Sicherheit der Vorrichtung vorteilhaften, Ausgestaltung mit den Merkmalen des Anspruchs 7, weist das Gehäuse des Zählers einen Fluidleckage-Erkennungssensor zur Feststellung einer Fluidleckage auf, wodurch eine Zufuhr des Mediums in den Zähler unterbrochen wird.

Die Erfindung wird nachfolgend anhand eines Ausführungsbeispiels unter Bezugnahme auf die Zeichnungen näher erläutert. Es zeigen:
- Fig. 1: zeigt einen Gaszähler des bekannten Stands der Technik,
- Fig. 2: zeigt einen weiteren Gaszähler des bekannten Stands der Technik,
- Fig. 3 - 7: zeigen einen kompakten Fluidzähler gemäß der Erfindung.

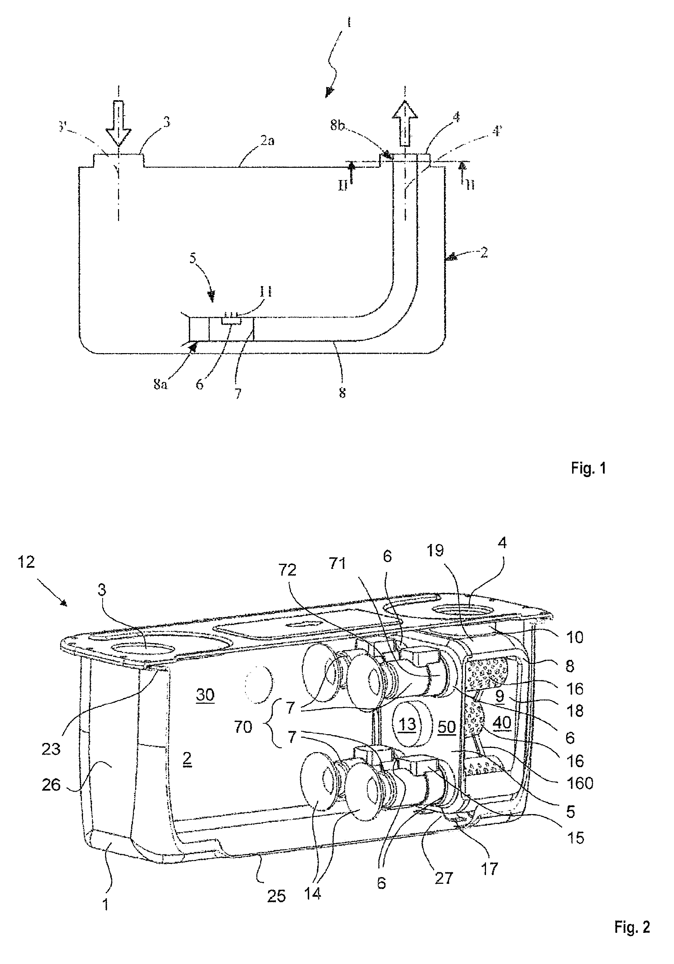

In Fig. 1 ist ein Gaszähler 1 für hohe Stromgeschwindigkeiten nach bekanntem Stand der Technik dargestellt. Ein Gehäuse 2, mit der Form eines Kastengehäuses 2a, weist eine Einlaufstrecke 3 und eine Auslaufstrecke 4 für den Gasstrom und eine Einrichtung 5 zur Messung des Stroms auf, der durch den Gasmengenmesser zugeführt wird, wobei die Messeinrichtung 5 Massendurchflussmesser 6 enthält, die innerhalb des Gehäuses 2 liegen. Durch diese Messer strömt der vorgegebene Teil des Gesamtstroms, der in den Zähler zugeführt wird. Dieser vorbestimmte Stromteil korreliert mit dem Gesamtstrom, so dass der Gesamtstrom des zugeführten Gases sich aus den Messungen ergibt, die von der Gruppe der Massendurchflussmesser 6 ermittelt werden. In diesem Zähler ist der Massendurchflussmesser 6 mit einer zusätzlichen Rohrleitung 8 versehen, durch die der vorgegebene Teil des Gesamtstroms strömt. Die Messeinrichtung hat die Abmessung des Durchgangsquerschnitts des ersten Endes 8a der Rohrleitung 8 und korreliert mit der Gesamtabmessung der Auslaufstrecke 4 des Zählers, entsprechend dem Verhältnis der Korrelation zwischen dem vorgegebenen und dem gesamten Stromteil. Die Nachteile dieser Erfindung sind beträchtliche Außenabmessungen des Zählers, sowie die Tatsache, dass die Durchflussmessabweichung des Gesamtstroms Korrelationsfehler dieses Gesamtstroms mit der gemessenen Abzweigung (Skaleneffekt) enthält.

In Fig. 2 ist ein weiterer Gaszähler (Durchflussmesser) nach bekanntem Stand der Technik dargestellt, der aus einem Gehäuse 1 besteht, das eine für das Medium dichte Kammer (Raum) 2 des Stroms bildet, die zur Messung der Fluidstromgeschwindigkeit dient. Das Gehäuse 1 enthält einen Haupteinlaufkanal 3 der den Fluidstrom in die Kammer 2 richtet, einen Hauptauslaufkanal 4 für den Strom des Fluides, das aus der Kammer 2 ausfließt, und eine Zwischenwand 5. Die Zwischenwand 5 ist in der Kammer 2 ausgeführt und trennt den Hauptstrom des Mediums auf der Einlaufseite 30 vom Hauptstrom des Mediums auf der Auslaufseite 40 ab. Das Gehäuse 1 ist mit einer Möglichkeit ausgeführt, eine Mehrzahl von Durchflussrohren 70 zu enthalten, die mindestens ein Durchflussmesserrohr 7 zur Messung der Fluidstromgeschwindigkeit einschließen. Die Zwischenwand 5 enthält eine Mehrzahl von Anschlussstellen (Aufnahmestellen) 6, jede Anschlussstelle 6 ist mit einer Möglichkeit ausgeführt, mindestens einen Durchflusssensor oder mindestens ein Durchflussmesserrohr 7 anzuschließen. Die Mehrzahl von Durchflussmesserrohren 70 und jede Anschlussstelle 6 enthält mindestens ein Durchgangsloch, so dass das Durchgangsloch oder jedes Durchflussmesserrohr 7 den Hauptstrom des Fluides auf der Einlaufseite 30 mit dem Hauptstrom des Fluides auf der Auslaufseite 40 verbindet. Das Gehäuse 1 weist weiterhin einen Kasten 8 mit einer Zwischenwand 5 der Durchflusseinrichtung 12 auf, so dass es für die Messung der Fluidstromgeschwindigkeit geeignet ist. Die Nachteile dieser Erfindung sind: die Aufbaukomplexität und die Durchflussmessabweichung des Gesamtstroms, die sowohl Korrelationsfehler dieses Gesamtstroms durch die Messungen der einzelnen Durchflussmesser, als auch die Summe der Abweichungen dieser einzelnen Durchflussmesser umfasst.

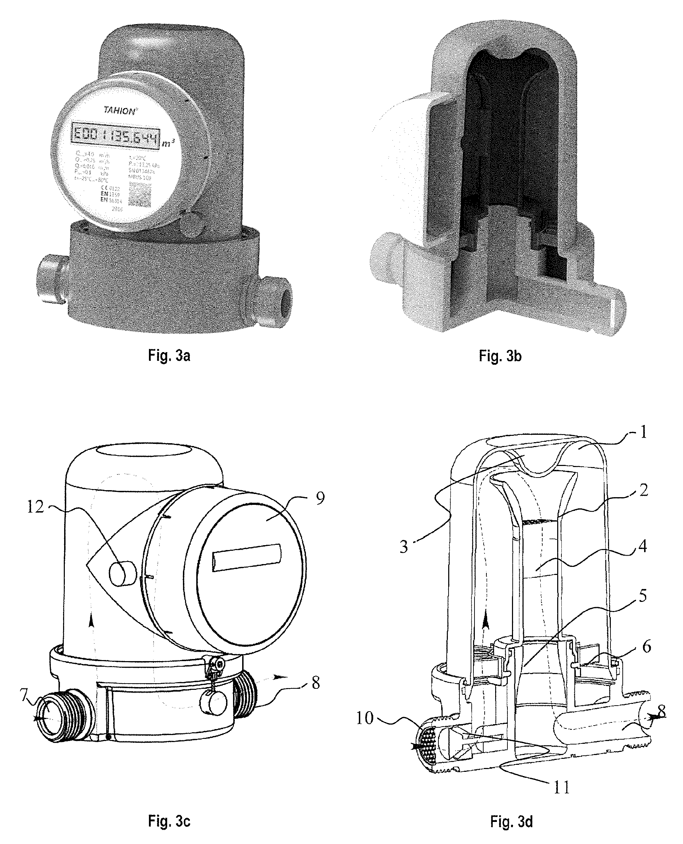

Fig. 3 zeigt, als ein Beispiel der Erfindung, einen festmontierbaren Fluidzähler/Durchflussmesser, der zur Messung von Fluidströmen dient und nach Volumenprinzipien arbeitet. Die Erfindung betrifft Zähler, die nicht nur im Haushalt (zum Beispiel, Typengrößen G4/G6), sondern auch für die sichere Messung hoher Stromgeschwindigkeit verwendet werden können, das heißt, für industrielle Messzähler der Typengrößen G10, G16, G25, G40, und so weiter (wobei die Typengröße G25 z. B. eine Stromgeschwindigkeit bis zu 48 m3/h bedeutet). Die Erfindung betrifft weiterhin den Bereich der Zähler, die von elektronischen Fernsteuerungssystemen umfasst werden, für die die Anwendung von Druck- und Temperaturgebern und zusätzlichen Mengenumwertern notwendig ist, um Näherungsfehler auszugleichen, die wegen der Druck- und Temperaturschwankungen entstehen.

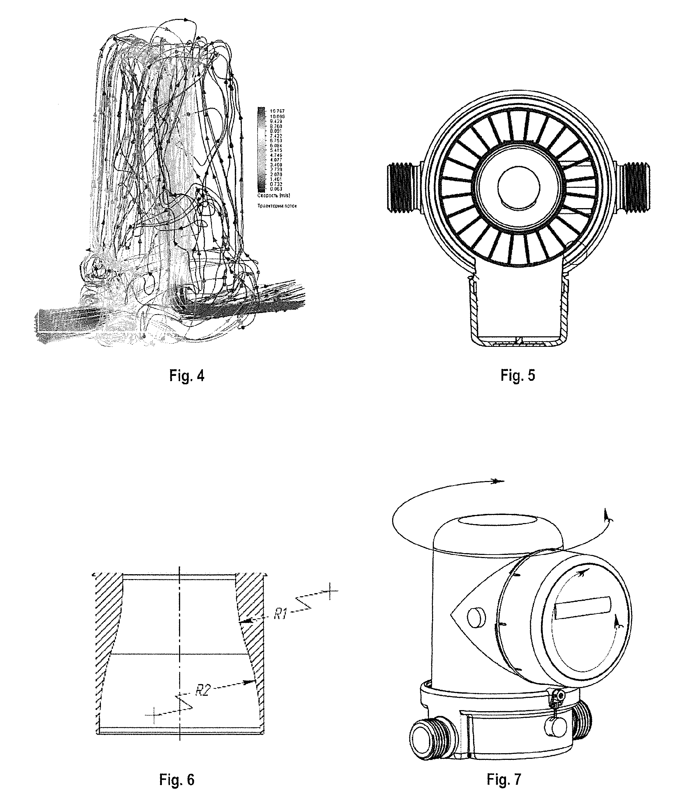

In Fig. 3 - 7 sind dargestellt:
- eine Außenansicht des Zählers (Fig. 3a),
- eine dreidimensionale Ansicht des Zählers mit der Darstellung seines inneren Teils im Schnitt (Fig. 3b),
- eine schematische dreidimensionale Außenansicht des Zählers mit der Darstellung seiner Elektronikeinheit, seines Gasleckage-Erkennungssensor, seiner Einund Auslaufkanäle (Fig. 3c),
- eine schematische Ansicht des Zählers im Schnitt, der entsprechend dieser Erfindung ausgeführt ist (Fig. 3d),
- die Bewegungsrichtung und die Verteilung der Messstoffströme im Zähler (Fig. 4),
- eine schematische Ansicht (Draufsicht) der Stromvorbereitungseinrichtung (Gitter, Zerteiler) (Fig. 5),
- eine schematische Darstellung der Übergangseinrichtung im Schnitt (Fig. 6),
- eine schematische Darstellung der Drehrichtung der beweglichen Teile des Zählers (Gehäuse, Elektronikeinheit) (Fig. 7).

Der Fluidzähler umfasst die folgenden Komponenten (Fig. 3a - 3d):
- ein zylindrisches Gehäuse 1, das eine Kammer 2 und einen Boden mit einem gewölbten Teil 3 in einer Konfiguration aufweist, die eine Stromausbildung ermöglicht,
- einen Durchflussmesser 4 beliebiger Funktionsweise, der in einem zentralen Teil des Gehäuses 1 des Zählers liegt und zur Messung der Stromgeschwindigkeit des Mediums dient,
- eine Übergangseinrichtung 5 zur Anpassung verschiedener Durchmesser der Durchflussmesser und der Auslauföffnung des Zählers,
- eine Stromvorbereitungseinrichtung 6, die zur Trennung und Stabilisierung des Messstoffstroms dient,
- einen Einlaufkanal 7 des Messstoffstroms,
- einen Auslaufkanal 8 für den Strom des Mediums, das aus dem Zähler ausfließt,
- eine Elektronikeinheit 9,
- einen Grobfilter 10 im Einlaufkanal 7,
- ein Sperrventil 11 im Einlaufkanal 7,
- einen Fluidleckage-Erkennungssensor (12).

Die Funktionsweise des Zählers ist wie folgt:
- der Messstoff kommt in den Einlaufkanal 7, strömt durch den Grobfilter 10, die Stromvorbereitungseinrichtung 6 und wird in eine Mehrzahl von Strömen zerteilt,
- die Ströme verteilen sich über den ganzen Raum der Kammer 2, strömen ihrer Zentralachse entlang von einem Boden zum anderen durch den Raum, der von der Innenfläche der Wände des Gehäuses 1 und der Außenfläche des Durchflussmessers 4 gebildet wird, umströmen den nach innen gewölbten Teil 3, in dem sie seiner Form folgen, und bilden am Einlauf des Durchflussmessers 4 einen einheitlichen, stabilen, gleichmäßigen Strom, was sehr günstige Bedingungen für eine präzise Messung seiner Geschwindigkeit sicherstellt.

Die Bewegungsrichtung und die Verteilung der Messstoffströme im Zähler sind in Fig. 3d, 4 dargestellt.

Danach
- durchläuft dieser Strom den Innenraum des Durchflussmessers 4 und fließt durch den Auslaufkanal 8 des Zählers,
- der Durchflussmesser 4 bildet beim Durchfließen des Mediums durch seinen Innenraum ein Signal, das der Stromgeschwindigkeit proportional ist,
- und die Elektronikeinheit 9 des Zählers empfängt dieses Signal, bearbeitet es und bildet ein Signal, das dem Volumenstrom des Mediums proportional ist.

In Fig. 5 ist eine schematische Ansicht (Draufsicht) der Stromvorbereitungseinrichtung (Gitter, Zerteiler) dargestellt. Die Stromvorbereitungseinrichtung 6 ist ein Gitter, das so im unteren zylindrischen Teil der Kammer 2 liegt, dass der Messstoff durch den Einlaufkanal 7, durch die Stromvorbereitungseinrichtung 6 und in die Kammer 2 des Gehäuses 1 des Zählers strömt. Das Gitter der Stromvorbereitungseinrichtung ist ein Schaufelsatz mit mindestens 21 Schaufeln und solchen Abmessungen, dass sie nicht mehr als 23% der Gesamtfläche des Querschnitts der Kammer 2 sperren. Die Stromvorbereitungseinrichtung 6 erfüllt die Zerteilung des Messstoffstroms, stellt die Bedingungen der Ausbildung eines stabilen, gleichmäßigen Stroms sicher, und verringert dadurch beträchtlich die Effekte, die durch die hohe Energie des Wirbelstroms am Einlauf des Durchflussmessers 4 verursacht sind. Die Zähler, deren Funktion auf Volumenprinzipien beruht, neigen zu Fehlern, die infolge der Verzerrungen des Gasstroms in der Rohrleitung durch verschiedene destabilisierende Faktoren der Hähne, Ventile, Umschalter, Rohrkrümmer, Rohrverengungen und - erweiterungen, Durchmessergefälle, Hülsen von Temperatur- und Druckmessern usw. (Einzelwiderstände) entstehen. Die Anwendung der Stromvorbereitungseinrichtung 6 zusammen mit der beschriebenen Konfiguration der Kammer 2 ermöglicht die Stabilisierung dieses Stroms, den Ausgleich seiner Geschwindigkeitskennlinie, und beseitigt dadurch die Notwendigkeit der Anwendung von externen Geräten (Adaptern), die zur Ausbildung eines ungestörten Gasstroms bei beliebigen, beträchtlichen Störungen und Verzerrungen des Messstoffstrom am Einlauf des Zählers dienen.

Der Durchflussmesser 4 ist ein Messgerät (Sensor, Durchflussmesserrohr) beliebiger Funktionsweise zur Messung des Volumenstroms oder der Stromgeschwindigkeit. Der Sensor befindet sich so im Zentrum der zylindrischen Kammer 2 des Gehäuses 1 des Zählers. Als Durchflussmesser 4 können beliebige bekannte Messgeräte des Durchflusses oder der Stromgeschwindigkeit nach der Volumen- oder Massenfunktionsweise (Turbinenzähler, Wälzkolbenzähler, Ultraschallzähler, Anemometer usw.) mit Abmessungen eingesetzt werden, die den Abmessungen der Kammer 2 des Gehäuses 1 des Zählers entsprechen. Deswegen entfällt die Notwendigkeit der weiteren Beschreibung dieses Durchflussmessers 4. Auf jeden Fall misst der Durchflussmesser 4 Werte, die direkt oder indirekt auf das Volumen des Mediums hinweisen, das durch das Rohr und den Zähler strömt. Diese Werte werden vom Durchflussmesser 4 in die Elektronikeinheit 9 des Zählers zur weiteren Bearbeitung und Speicherung übergeben.

Das wesentliche Merkmal des Zählers ist das Vorhandensein einer Übergangseinrichtung 5, im inneren, unteren Teil des Gehäuses 1 (nach der Auslauföffnung des Durchflussmessers), zur Anpassung der Durchmesser des Durchflussmessers 4 und der Auslauföffnung des Zählers selbst. Diese Übergangseinrichtung ermöglicht die Einsetzung von Durchflussmessern verschiedener Durchmesser im Zähler, abhängig vom erforderlichen Bereich der gemessenen Durchflüsse. Die schematische Darstellung der Übergangseinrichtung im Schnitt ist in Fig. 6 gezeigt.

Der Einlaufkanal 7 des Mediumstroms ist eine Bohrung, ein Kanal, der den Fluidstrom in die Kammer 2 des Gehäuses 1 des Zählers richtet.

Der Auslaufkanal 8 dient zur Ableitung des Stroms des Fluids, das aus der Kammer 2 des Gehäuses 1 des Zählers ausfließt.

Die Elektronikeinheit 9 dient zur Feststellung, Bearbeitung und Speicherung von Werten bzw. den Ergebnissen der Bearbeitung der Werte, die vom Durchflussmesser 4 übermittelt werden und zur elektronischen Steuerung. Der Typ der Elektronikeinheit 9 kann abhängig von Bedürfnissen der Realisierung variieren, und übt keinen wesentlichen Einfluss auf diese Erfindung aus. Die Elektronikeinheit 9 ist mit dem Durchflussmesser 4 durch eine physikalische Datenleitung (der Begriff "physikalische Datenleitung" bedeutet hier eine Leitung eines oder mehrerer Festkörperverbinder (wie Stecker, Verdrahtung) oder eine Leitung drahtloser Verbindung (Radio, Bluetooth usw.) verbunden. In Fig. 3 ist eine Ausführungsform der Erfindung dargestellt, in der sich die Elektronikeinheit 9 auf der Außenseite des Gehäuses 1 des Zählers befindet.

Der Grobfilter 10 befindet sich im Einlaufkanal 7 des Zählers und dient zur Reinigung des Messstoffes von Fremdstoffen, die den Durchflussmesser 4 oder die Stromvorbereitungseinrichtung 6 verschmutzen oder beschädigen können.

Das Sperrventil 11 befindet sich ebenfalls im Einlaufkanal 7 und sorgt für das Schließen (Absperren) des Mediumstroms aufgrund eines Signals, das von der Elektronikeinheit 9 stammt.

Der Fluidleckage-Erkennungssensor 12 dient zur sicheren Feststellung der Fluidleckage aus dem Zähler, zum Auslösen des Sperrventils 11 und damit zum Abbruch der Mediumzufuhr in den Zähler. Dieser Sensor ist von großer Bedeutung für die Sicherstellung der Betriebssicherheit von brennbaren Medien, deren Leckage zu einem Unfall mit schwerwiegenden Folgen führen kann.

Das Gehäuse 1 besteht aus zwei Teilen (Fig. 7):
- einem festen Teil (Boden), in dem sich der Einlaufkanal 7, der Auslaufkanal 8, die Stromvorbereitungseinrichtung 6, der Grobfilter 10, das Sperrventil 11, die Übergangseinrichtung 5 und der Durchflussmesser 4 befinden,
- einem beweglichen Teil in Form eines Zylinders (Glocke) mit einer Abrundung in einem der Böden, der sich seiner Zentralachse entlang drehen kann. Auf dem äußerlichen beweglichen Teil des Gehäuses 1 wird die Elektronikeinheit 9 angebaut, deren Stirnseite sich auch um ihre Zentralachse drehen kann.

In Fig. 7 wird die Drehrichtung der beweglichen Teile des Gehäuses und der Elektronikeinheit mit Pfeilen gezeigt.

### Bezugszeichenliste

Fig. 1
   - 1: Gaszähler für hohe Stromgeschwindigkeiten
   - 2: Gehäuses
   - 2a: Kastengehäuse
   - 3: Einlaufstrecke
   - 4: Auslaufstrecke
   - 5: Messeinrichtung
   - 6: Massendurchflussmesser
   - 8: Rohrleitung
   - 8a: Ersten Endes
Fig. 2
   - 1: Gehäuse
   - 2: Kammer
   - 3: Haupteinlaufkanal
   - 4: Haupteinlaufkanal
   - 5: Zwischenwand
   - 6: Anschlussstellen (Aufnahmestellen)
   - 7: Durchflussmesserrohr
   - 8: Kasten zur Trennung
   - 12: Durchflusseinrichtung
   - 30: Einlaufseite
   - 40: Auslaufseite
   - 70: Durchflussmesserrohre
Fig. 3c - 3d
   - 1: Gehäuse
   - 2: Kammer
   - 3: Austritt
   - 4: Durchflussmesser
   - 5: Übergangseinrichtung
   - 6: Stromvorbereitungseinrichtung
   - 7: Einlaufkanal
   - 8: Auslaufkanal
   - 9: Elektronikeinheit
   - 10: Grobfilter
   - 11: Sperrventil
   - 12: Fluidleckage-Erkennungssensor

## Patentansprüche

1. Fluidzähler mit folgenden Bauteilen:
- ein Gehäuse (1), das eine Kammer (2) mit einem nach innen gewölbten Teil (3) in einer Konfiguration aufweist, welche eine Stromausbildung eines Mediums ermöglicht,
- einen Durchflussmesser (4), der innerhalb des Gehäuses (1) liegt und zur Messung der Stromgeschwindigkeit des Mediums dient,
- eine Übergangseinrichtung (5) zur Anpassung verschiedener Durchmesser des Durchflussmessers (4) und der Auslauföffnung des Zählers,
- eine Stromvorbereitungseinrichtung (6), die zur Trennung und Stabilisierung des Messstoffstroms dient,
- einen Einlaufkanal (7) des Messstoffstroms,
- einen Auslaufkanal (8) für den Mediumstrom, das aus dem Zähler ausfließt,
- eine Elektronikeinheit (9),
- einen Grobfilter (10),
- ein Sperrventil (11),
- und einen Fluidleckage-Erkennungssensor (12).

2. Fluidzähler nach Anspruch 1,
**dadurch gekennzeichnet,**
**dass** das Gehäuse (1) in Form eines Zylinders mit einer gleichmäßigen Abrundung eines der Böden ausgeführt ist und eine Kammer (2) aufweist.

3. Fluidzähler nach einem der vorhergehenden Ansprüche,
**dadurch gekennzeichnet,**
**dass** der abgerundete Boden der Kammer (2) einen nach innen gewölbten Teil (3) in Form einer Glocke aufweist, wobei das Medium, durch die Kammer (2) strömend, die Glocke (3) umströmt, indem es seiner Form (Konfiguration) folgt, und im zentralen Teil der Kammer (2) im Einlauf des Durchflussmessers (4) zusammenfließt und durch den Innenraum des Durchflussmessers (4) aus dem Auslaufkanal (8) des Zählers hinausfließt.

4. Fluidzähler nach einem der vorhergehenden Ansprüche,
**dadurch gekennzeichnet,**
**dass** der Durchflussmesser (4) im Zentrum entlang der Achse der zylindrischen Kammer (2) liegt, wobei der ausgebildete, stabile und gleichmäßige Strom in seinen Einlauf kommt, durch seinen Innenteil strömt, aus seinem Auslauf ausfließt und aus dem Zähler durch den Auslaufkanal (8) austritt.

5. Fluidzähler nach einem der vorhergehenden Ansprüche,
**dadurch gekennzeichnet,**
**dass** die Kammer (2) einer Übergangseinrichtung (5) aufweist, die zur Anpassung der Durchmesser des Durchflussmessers und der Auslauföffnung des Zählers selbst dient, wobei die Übergangseinrichtung (5) im Zentrum des Bodens der Kammer (2) montiert ist, das dem Boden entgegen liegt, das eine Abrundung und einen nach innen gewölbten Teil (3) aufweist.

6. Fluidzähler nach einem der vorhergehenden Ansprüche,
**dadurch gekennzeichnet,**
**dass** die Kammer (2), in ihrem Boden, eine gitterförmige Stromvorbereitungseinrichtung (6) aufweist, wobei der Messstoffstrom durch den Einlaufkanal (7) durch die Stromvorbereitungseinrichtung (6) strömt und in eine Mehrzahl von einzelnen Strömen zerteilt wird, und in die Kammer (2) des Gehäuses (1) des Zählers kommt.

7. Fluidzähler nach einem der vorhergehenden Ansprüche,
**dadurch gekennzeichnet,**
**dass** das Gehäuse (1) des Zählers einen Fluidleckage-Erkennungssensor (12) zur Feststellung einer Fluidleckage aufweist, wodurch das Sperrventils (11) ausgelöst und eine Zufuhr des Mediums in den Zähler unterbrochen wird.
